# EUROPÄISCHE PATENTANMELDUNG

(11) **EP 3 795 429 A1**
(43) Veröffentlichungstag der Anmeldung: **24.03.2021**
(21) Anmeldenummer: 19198905.2
(22) Anmeldetag: 23.09.2019
(51) Int. Cl.: B60R 21/215, B60R 21/216

(54) **SICHERHEITSVORRICHTUNG FÜR EIN KRAFTFAHRZEUG**

(71) Anmelder: MAGNA STEYR Fahrzeugtechnik AG & Co KG, 8041 Graz (AT)
(72) Erfinder: KOTUCHA, Thomas, 63872 Heimbuchental (DE)
(74) Vertreter: Zangger, Bernd

(57) **Zusammenfassung**

Eine Sicherheitsvorrichtung für ein Kraftfahrzeug, umfassend einen Airbag (1), eine Airbagklappe (2) die in einem Normalzustand des Kraftfahrzeugs den Airbag (1) zumindest abschnittsweise überdeckt, wobei die Airbagklappe (2) in einem Unfallzustand des Kraftfahrzeugs aufschwenkt, wobei die Sicherheitsvorrichtung ein Anschlagteil (3) aufweist, wobei das Anschlagteil (3) bei einem Aufschwenken der Airbagklappe (2) mit der Airbagklappe (2) aufschwenkt, wobei die Aufschwenkbewegung des Anschlagteils (3) begrenzt ist und wobei die Aufschwenkbewegung der Airbagklappe (2) durch das Anschlagteil (3) begrenzt ist und ein Kraftfahrzeug mit einer solchen Sicherheitsvorrichtung.

## Beschreibung

### Gebiet der Erfindung

Die vorliegende Erfindung betrifft eine Sicherheitsvorrichtung für ein Kraftfahrzeug, umfassend einen Airbag, und ein Kraftfahrzeug mit einer solchen Sicherheitsvorrichtung.

### Stand der Technik

Airbags sind als Sicherheitseinrichtung in Kraftfahrzeugen seit längerem bekannt. Beispielsweise als Kopfairbags dienen solche Airbags dazu, den Kopf eines Insassen bei einem Unfall zurückzuhalten und vor einem Aufprall an einem harten Bauteil, insbesondere an Innenraumteilen des Kraftfahrzeuges, zu bewahren.

Airbags sind üblicherweise im Normalzustand eines Kraftfahrzeugs von einer Airbagklappe verdeckt, die beim Auslösen des Airbags, wenn ein Unfallzustand erkannt wird, vollständig öffnet oder entfernt wird, um das ungehinderte Austreten des Airbags aus seinem gelagerten Zustand zu ermöglichen.

Gerade bei geöffneten Fenstern und/oder bei Kraftfahrzeugen ohne Dach und insbesondere ohne tragende B-Säule, also speziell bei Cabrios, funktionieren Airbags als Kopf-Rückhaltesysteme nur beschränkt, da ein im Unfallzustand aufgeblasener Airbag unter derartigen Bedingungen viel Raum für Bewegungen hat, somit wenig Rückhalt für beispielsweise den Kopf eines Insassen bietet und somit einen geringen Unfallsschutz bietet, insbesondere bei einem seitlichen Unfall.

Die US 2012 032 426 A1 offenbart beispielsweise eine Kopfschutz-Airbagvorrichtung, die an einem Fahrzeug mit einer Scheibe montierbar ist, wobei die Airbagvorrichtung einen Airbag umfasst, der dazu ausgebildet ist, dass er in einer zusammengefalteten Konfiguration an einer Oberkante der Scheibe untergebracht werden kann und nach unten entfaltbar ist, um eine innenliegende Seite der Scheibe abzudecken, wenn er mit einem Aufblasgas gespeist wird. Dieser Airbag umfasst einen aufblasbaren Abschirmabschnitt, der geeignet ist, an einem Element einer Fahrzeugkarosseriestruktur durch dessen Oberkante an der Oberkante des Fensters befestigt zu werden und das Fenster bei voller Airbagauslösung abzudecken; und einen stützenden aufblasbaren Bereich, der in Gasverbindung mit dem Abschirmabschnitt steht und zwischen einer Außenseite in der Nähe eines oberen Endes des Abschirmabschnitts und dem Element der Fahrzeugkarosseriestruktur in mindestens einem oberen Bereich des Fensters einsetzbar ist, wobei sich der stützende aufblasbare Bereich nach dem Abschirmabschnitt aufbläst und die Außenseite in der Nähe des oberen Endes des Abschirmabschnitts stützt.

### Zusammenfassung der Erfindung

Es ist eine Aufgabe der Erfindung, eine Sicherheitsvorrichtung für ein Kraftfahrzeug anzugeben, die auch für Cabrios, bei geöffneten Fenstern und/oder fehlender B-Säule eines Fahrzeuges einen zuverlässigen Schutz bei einem Seitenunfall bietet. Eine weitere Aufgabe ist es ein Kraftfahrzeug mit einer derart zuverlässigen Sicherheitsvorrichtung anzugeben.

Die Lösung der Aufgabe erfolgt durch eine Sicherheitsvorrichtung für ein Kraftfahrzeug, umfassend einen Airbag, eine Airbagklappe die in einem Normalzustand des Kraftfahrzeugs den Airbag zumindest abschnittsweise überdeckt, wobei die Airbagklappe in einem Unfallzustand des Kraftfahrzeugs aufschwenkt, wobei die Sicherheitsvorrichtung ein Anschlagteil aufweist, dass bei einem Auf-schwenken der Airbagklappe mit der Airbagklappe aufschwenkt, wobei die Aufschwenkbewegung des Anschlagteils begrenzt ist und wobei die Aufschwenkbewegung der Airbagklappe durch das Anschlagteil begrenzt ist.

Erfindungsgemäß ist somit an einer Airbagklappe, die normalerweise das Airbag zumindest abschnittsweise überdeckt und somit, wenn die Airbagklappe eine dem Innenraum zugewandte, sichtbare Schicht darstellt, insbesondere einen Teil der Innenraum-Verkleidung des Kraftfahrzeugs, das Airbag somit auch für einen Fahrzeug-Insassen verdeckt, ein Anschlagteil angebracht, dass beim Öffnen der Airbagklappe zur Freigabe des Airbags gemeinsam mit der Airbagklappe aufschwenkt, dessen Schwenkbewegung aber begrenzt ist. Durch die Begrenzung der Bewegung des Anschlagteils wird sowohl die Schwenkbewegung des Anschlagteils selbst, als auch die Schwenkbewegung der Airbagklappe gestoppt. Die Airbagklappe befindet sich daher nach dem Öffnen und bei entfaltetem Airbag in einer gewünschten Position, in der die Airbagklappe ein Gegenlager für das Airbag bildet und somit die Rückhaltewirkung beispielsweise eines Fensters oder einer B-Säule ersetzt. Die Airbagklappe kann dazu vom Anschlagteil beispielsweise in einer senkrechten Position angehalten werden. Die Airbagklappe bildet im Unfallzustand ein Gegenlager, um ein Wegdrücken des Airbags durch einen Kopf eines Insassen zu verhindern.

Die Airbagklappe kann ein Sichtbauteil sein, insbesondere ein Dekor- und/oder Kunststoffteil, und kann in der Türverkleidung angebracht sein. Die Airbagklappe kann aber auch ein unter einem Sichtbauteil angeordnetes zusätzliches Teil sein, nämlich entweder ein Verkleidungsteil, also ein weiteres den Rohbau verkleidendes Kunststoffbauteil, oder ein unter den Verkleidungsteilen, die meist aus Kunststoff gefertigt sind, angeordnetes Teil sein, insbesondere ein stabiles Teil, wie ein massives Rohbauteil. In diesem Falle ist die Airbagklappe für gewöhnlich unter einem schöneren Sichtbauteil und/oder Verkleidungsteil und/oder einer Dekorschicht verborgen. Beim Sichtbauteil bzw. Verkleidungsbauteil kann es sich auch um ein mit der Airbagklappe verbundenes und/oder einteiliges Bauteil handeln oder diese Sichtbauteil und Airbagklappe können durch zwei separate Bauteile gebildet sein.

Es ist möglich, dass die Airbagklappe den Airbag nur teilweise, also abschnittsweise, überdeckt und somit nur teilweise in dessen Entfaltungsbereich angeordnet ist, diesen jedoch im nicht entfalteten Zustand nicht vollständig überdeckt oder schließt. Die Airbagklappe kann den Airbag auch vollständig überdecken und somit vollständig in dessen Entfaltungsbereich angeordnet sein.

Vorzugsweise ist die Aufschwenkbewegung des Anschlagteils durch Auftreffen auf ein Rohbauteil des Kraftfahrzeugs begrenzt.

Das Anschlagteil ist bevorzugt ein längliches Bauteil, insbesondere eine Anschlagrippe. Ein erstes Ende des Anschlagteils kann an der Airbagklappe befestigt sein. Eine Anschlagfläche des Anschlagteils kann näher zum, dem ersten Ende gegenüberliegenden, zweiten Ende des Anschlagteils liegen.

Das Anschlagteil ist bevorzugt ein von der Airbagklappe getrenntes Bauteil. Alternativ kann das Anschlagteil auch einstückig mit der Airbagklappe ausgebildet sein.

Die Airbagklappe schwenkt in einem Unfallzustand des Kraftfahrzeugs bevorzugt in Richtung zu einer Außenseite des Kraftfahrzeuges auf. "Außenseite" meint herbei eine seitliche Begrenzung des Fahrzeuges, nicht die Front oder Heckseite des Fahrzeuges.

Vorzugsweise bildet die Airbagklappe ein Verkleidungsteil des Kraftfahrzeugs. Die Airbagklappe kann ein im Normalzustand sichtbares Verkleidungsteil_sein, oder ein unter einem sichtbaren Verkleidungsteil angeordnetes zusätzliches Bauteil sein, beispielsweise ein zumindest teilweise nicht sichtbares zusätzliches Verkleidungsteil, insbesondere aus Kunststoff oder Metall, oder ein zusätzliches Bauteil in Form eines massiven Rohbauteiles.

Ein erfindungsgemäßes Kraftfahrzeug weist eine Sicherheitsvorrichtung wie zuvor beschrieben auf. Das Kraftfahrzeug umfasst bevorzugt ein Rohbauteil, wobei die Aufschwenkbewegung des Anschlagteils durch Auftreffen des Anschlagteils auf das Rohbauteil des Kraftfahrzeugs begrenzt ist.

Bevorzugt ist das Kraftfahrzeug ein Cabrio oder ein Coupé.

Bevorzugt weist das Kraftfahrzeug keine B-Säule auf.

Vorzugsweise sind der Airbag und die Airbagklappe, im Normalzustand des Kraftfahrzeugs, in einer Seitenverkleidung des Kraftfahrzeugs angeordnet.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht einer nicht erfindungsgemäßen Sicherheitsvorrichtung in einem Unfallzustand mit einem auftreffenden Kopf.
- Fig. 2: ist eine schematische Schnittansicht einer erfindungsgemäßen Sicherheitsvorrichtung in dem selben Unfallzustand mit dem auftreffenden Kopf gemäß Fig. 1.
- Fig. 3: ist eine Detaildarstellung der erfindungsgemäßen Sicherheitsvorrichtung gemäß Fig. 2 in einem Normalzustand, bei geschlossener Airbagklappe.
- Fig. 4: ist eine Detaildarstellung der erfindungsgemäßen Sicherheitsvorrichtung gemäß Fig. 2 im Unfallzustand, bei aufgeschwenkter Airbagklappe.

### Detaillierte Beschreibung der Erfindung

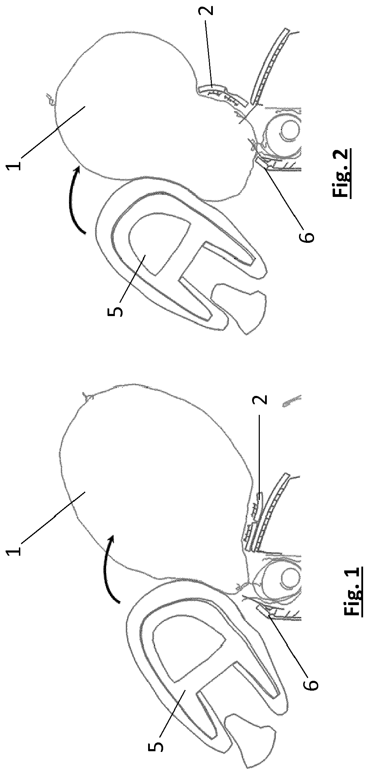

In den Fig. 1 und 2 ist die Funktion einer nicht erfindungsgemäßen Sicherheitsvorrichtung (Fig. 1) der Funktion einer erfindungsgemäßen Sicherheitsvorrichtung (Fig. 2) gegenübergestellt. Die Sicherheitsvorrichtung befindet sich jeweils in einem Cabrio, wobei das Verdeck des Fahrzeuges geöffnet ist.

Beide Figuren zeigen die Sicherheitsvorrichtung in einem Unfallzustand des betreffenden Kraftfahrzeugs, also bei aufgeschwenkter Airbagklappe 2 und expandiertem Airbag 1. Jeweils trifft der Kopf 5 eines Insassen des Kraftfahrzeugs auf den Airbag 1 auf.

Durch den Aufprall des Kopfes 5 wird der Airbag 1 jeweils in der eingezeichneten Pfeilrichtung in Richtung nach Außen weggedrückt. Bei Verwendung einer nicht erfindungsgemäßen Sicherheitsvorrichtung (Fig. 1) wird der Airbag 1 vom auftreffenden Kopf 5 so weit weggedrückt und verlässt daher den Innenraum des Kraftfahrzeuges so weit, dass es zu einem Aufprall des Kopfes 5 des Insassen auf Innenraumteile 6 des Kraftfahrzeuges kommen kann.

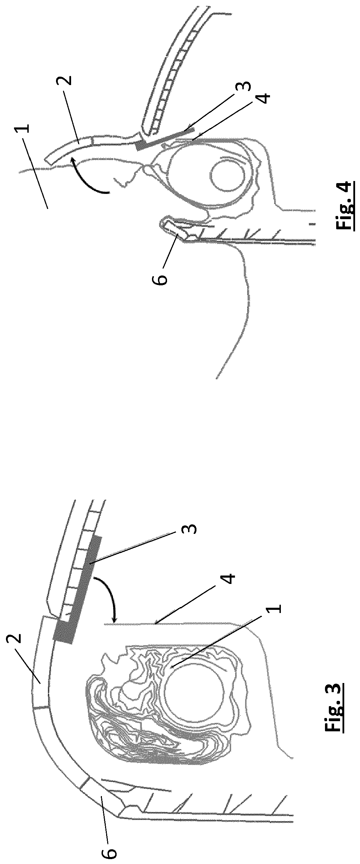

Bei Verwendung einer erfindungsgemäßen Sicherheitsvorrichtung (Fig. 2) wird der Airbag 1 vom auftreffenden Kopf 5 zwar ebenfalls weggedrückt, jedoch stützt sich der Airbag dabei auf der Airbagklappe 2 ab, die mittels eines Anschlags 3 (siehe Fig. 3 und 4) in einer senkrechten Position festgelegt ist. Der Airbag 1 verlässt daher den Innenraum des Kraftfahrzeuges weniger, so dass ein Aufprall des Kopfes 5 des Insassen auf die Innenraumteile 6 des Kraftfahrzeuges vermieden wird bzw. zumindest besser abgemildert wird.

Fig. 3 ist eine Detaildarstellung der erfindungsgemäßen Sicherheitsvorrichtung gemäß Fig. 2 in einem Normalzustand des Kraftfahrzeuges, nämlich wieder eines Cabrios mit geöffnetem Verdeck. Der Airbag 1 und die Airbagklappe 2 sind im Normalzustand des Kraftfahrzeugs in einer Seitenverkleidung des Kraftfahrzeugs angeordnet. Die Airbagklappe 2 ist dabei geschlossen, verläuft in einer gemeinsamen Ebene mit weiteren Innenraumteilen 6, und bildet ein sichtbares Verkleidungsteil des Innenraums des Kraftfahrzeugs.

Die Airbagklappe 2 verdeckt und/oder überdeckt in diesem Normalzustand des Kraftfahrzeugs den Airbag 1. Der Airbag 2 liegt komprimiert unter der Airbagklappe 2.

Die Sicherheitsvorrichtung weist ein Anschlagteil 3 auf. Das Anschlagteil 3 ist ein längliches Bauteil, insbesondere eine Anschlagrippe, dessen erstes Ende an der Airbagklappe 2 befestigt ist. Der Mittelteil und das entgegengesetzte zweite Ende Anschlagteils 3 bildet im Wesentlichen die eigentlichen Anschlagflächen des Anschlagteils 3 aus. Die Anschlagfläche des Anschlagteils 3, die ein weiteres Aufschwenken des Anschlagteils 3 und der Airbagklappe 2 verhindert, liegt auf derjenigen Seite des flächigen Anschlagteils 3, die dem Fahrzeuginnenraum zugewandt ist.

Das Anschlagteil 3 schwenkt bei einem Aufschwenken der Airbagklappe 2 mit der Airbagklappe 2 zusammen auf, nämlich in der durch einen Pfeil in Fig. 3 dargestellten Richtung. Die Airbagklappe 2 schwenkt in einem Unfallzustand des Kraftfahrzeugs in Richtung zu einer Außenseite des Kraftfahrzeuges auf. Die Aufschwenkbewegung des Anschlagteils 3 ist begrenzt durch Auftreffen des Anschlagteils 3 bzw. von dessen Anschlagfläche auf ein Rohbauteil 4 des Kraftfahrzeugs. Hierdurch ist auch die Aufschwenkbewegung der mit dem Anschlagteil 3 drehfest verbundenen Airbagklappe 2 begrenzt, so dass die aufgeschwenkte Airbagklappe 2 - wie in Fig. 4 dargestellt - ein Gegenlager bildet, um ein Wegdrücken des entfalteten Airbags 1 durch einen Kopf zu verhindern.

Fig. 4 zeigt die erfindungsgemäße Sicherheitsvorrichtung der Fig. 2 und Fig. 3 im Unfallzustand, bei aufgeschwenkter Airbagklappe 2.

Die Airbagklappe 2 ist dabei aufschwenkt. Der Luftdruck des Airbags 1 drückt die Airbagklappe 2 nach außen. Durch den Anschlag des Anschlagteils 3 am Rohbau 4 wird der Öffnungswinkel der Airbagklappe 2 jedoch begrenzt. Die Airbagklappe 2 wirkt daher als Gegenlager für den Airbag 1, auch bei einem Cabrio mit geöffnetem Verdeck.

Durch die erfindungsgemäße Ausbildung der Sicherheitseinrichtung wird somit die Rückhaltewirkung für einen Insassen des Kraftfahrzeuges verbessert. Ein unerwünschter Kopfkontakt eines Insassen mit Innenraumteilen bei einem Unfall des Kraftfahrzeuges wird vermieden.

### Bezugszeichenliste

- 1: Airbag
- 2: Airbagklappe
- 3: Anschlagteil
- 4: Rohbauteil
- 5: Kopf
- 6: Innenraumteile

## Patentansprüche

1. Sicherheitsvorrichtung für ein Kraftfahrzeug, umfassend einen Airbag (1), eine Airbagklappe (2) die in einem Normalzustand des Kraftfahrzeugs den Airbag (1) zumindest abschnittsweise überdeckt, wobei die Airbagklappe (2) in einem Unfallzustand des Kraftfahrzeugs aufschwenkt,
**dadurch gekennzeichnet, dass** die Sicherheitsvorrichtung ein Anschlagteil (3) aufweist, wobei das Anschlagteil (3) bei einem Aufschwenken der Airbagklappe (2) mit der Airbagklappe (2) aufschwenkt, wobei die Aufschwenkbewegung des Anschlagteils (3) begrenzt ist und wobei die Aufschwenkbewegung der Airbagklappe (2) durch das Anschlagteil (3) begrenzt ist.

2. Sicherheitsvorrichtung nach Anspruch 1,
**dadurch gekennzeichnet, dass** die Aufschwenkbewegung des Anschlagteils (3) durch Auftreffen auf ein Rohbauteil (4) des Kraftfahrzeugs begrenzt ist.

3. Sicherheitsvorrichtung nach zumindest einem der vorhergehenden Ansprüche,
**dadurch gekennzeichnet, dass** das Anschlagteil (3) ein längliches Bauteil ist, dessen erstes Ende an der Airbagklappe (2) befestigt ist.

4. Sicherheitsvorrichtung nach zumindest einem der vorhergehenden Ansprüche,
**dadurch gekennzeichnet, dass** die Airbagklappe (2) in einem Unfallzustand des Kraftfahrzeugs in Richtung zu einer Außenseite des Kraftfahrzeuges aufschwenkt.

5. Sicherheitsvorrichtung nach zumindest einem der vorhergehenden Ansprüche,
**dadurch gekennzeichnet, dass** die Airbagklappe (2) ein Verkleidungsteil des Kraftfahrzeugs bildet.

6. Kraftfahrzeug mit einer Sicherheitsvorrichtung nach zumindest einem der vorhergehenden Ansprüche,
**dadurch gekennzeichnet, dass** das Kraftfahrzeug ein Rohbauteil (4) umfasst und die Aufschwenkbewegung des Anschlagteils (3) durch Auftreffen auf das Rohbauteil (4) des Kraftfahrzeugs begrenzt ist.

7. Kraftfahrzeug nach Anspruch 6,
**dadurch gekennzeichnet, dass** das Kraftfahrzeug keine B-Säule aufweist.

8. Kraftfahrzeug nach Anspruch 6 oder 7,
**dadurch gekennzeichnet, dass** der Airbag (1) und die Airbagklappe (2) im Normalzustand des Kraftfahrzeugs in einer Seitenverkleidung des Kraftfahrzeugs angeordnet sind.
